# EUROPEAN PATENT SPECIFICATION

(11) **EP 1 518 717 B1**
(45) Date of publication and mention of the grant of the patent: **13.02.2008**
(21) Application number: 04010915.9
(22) Date of filing: 07.05.2004
(51) Int. Cl.: B60B 1/04, B60B 1/00, B60B 21/06

(54) **Wheel having detachably securing spokes**
Rad mit lösbar verbundenen Speichen
Roue avec des rayons à fixer de maniere amovible

(30) Priority: 27.09.2003 US 673298
(43) Date of publication of application: 30.03.2005
(73) Proprietor: Jaanluen Industry Co., Ltd., Hua Tan Hsiang, Changhua County (TW)
(72) Inventor: Chen, Yi-Sheng, Hemei Township Changhua County 508 (TW)
(74) Representative: Hauck Patent- und Rechtsanwälte

(56) References cited:
- EP-A- 1 236 586
- EP-A- 1 422 078
- DE-A1- 4 212 094
- DE-A1- 4 444 044
- DE-C1- 4 127 500
- US-A- 2 937 905

## Description

### BACKGROUND OF THE INVENTION

### 1. Field of the Invention

The present invention relates to a wheel, and more particularly to a wheel including a number of spokes that may be detachably secured to the wheel rim of the wheel.

### 2. Description of the Prior Art

Typical wheels comprise a wheel rim and a number of spokes threaded through the wheel rim, for securing the wheel rim to a hub member which will then be attached to a wheel axle.

Such a wheel according to the preamble of claim 1 is known from EP 1 236 586 A.

Another example is, U.S. 2,994,559 A to Carlson et al. that discloses one of the typical wheels and also comprises a number of spokes to be threaded through the wheel rim, for securing the wheel rim to the hub member.

Normally, the wheel rim includes a number of orifices formed therein, and each of the longitudinal spokes includes an enlarged head formed on one end thereof, for engaging and anchoring or securing the longitudinal spokes to the wheel rim, after the longitudinal spokes have been engaged through the orifices of the wheel rim.

However, the spokes include a longitudinal structure that may not be easily engaged or threaded through the orifices of the wheel rim, such that the workers or the users have to spend a lot of time to engage or to thread the longitudinal spokes through the orifices of the wheel rim.

The present invention has arisen to mitigate and/or obviate the afore-described disadvantages of the conventional spokes for wheels.

### SUMMARY OF THE INVENTION

The primary objective of the present invention is to provide a wheel including a number of spokes that may be detachably secured to the wheel rim of the wheel, for allowing the spokes to be easily secured or assembled into the wheel rim of the wheel.

In accordance with one aspect of the invention, there is provided a wheel comprising a wheel rim including a plurality of orifices formed therein, and including an inner surface, and each of the orifices of the wheel rim being defined by at least one engaging flange, a plurality of spokes to be attached to the wheel rim, a plurality of latches each including a bore formed therein to receive the spokes respectively, and to be attached to the spokes respectively. Each of the latches includes a base having a shape corresponding to that of the orifices of the wheel rim, for allowing the base of the latch to be engaged through the orifices of the wheel rim. Each of the latches further includes a catch disposed on the base, and having an outer peripheral contour no greater than that of the base, to allow the catch to be engaged through the orifices of the wheel rim, and each of the catches includes at least one cut off portion formed therein, to define at least one engaging surface therein, and to form at least one tongue in the base relative to the catch. The catches are engageable into the orifices of the wheel rim when the catches of the latches are rotated relative to the wheel rim, to engage the engaging flange of the wheel rim into the cut off portion of the catches, and to engage the tongue of the base with the inner surface of the wheel rim, and thus to anchor the base of the latch to the wheel rim.

Each of the latches includes a first fastener extended from the catch, and a second fastener threaded to the first fastener and engaged with the wheel rim, to secure the latch to the wheel rim.

Each of the spokes includes a barrel secured thereto and engaged into the bores of the latches respectively.

Each of the barrels includes a screw hole formed therein, each of the spokes includes a threaded end portion for threading with the screw hole of the barrels, and for securing the barrels to the spokes respectively.

Each of the barrels includes an enlarged head formed thereon, for engaging with the latches and for anchoring the spokes to the latches respectively.

Further objectives and advantages of the present invention will become apparent from a careful reading of the detailed description provided hereinbelow, with appropriate reference to the accompanying drawings.

### BRIEF DESCRIPTION OF THE DRAWINGS

FIG. 1 is a partial exploded view of a wheel in accordance with the present invention;
FIG. 2 is a partial exploded view illustrating the wheel spoke securing structure for the wheel;
FIGS. 3, 4, 5, 6 are partial perspective views illustrating the assembling operation of the wheel spokes to the wheel rim;
FIG. 7 is a partial exploded view similar to FIG. 1, illustrating the other embodiment of the wheel;
FIG. 8 is a partial exploded view illustrating the wheel spoke securing structure for the wheel as shown in FIG. 7;
FIGS. 9, 10, 11, 12 are partial perspective views illustrating the assembling operation of the wheel spokes to the wheel rim as shown in FIGS. 7 and 8,
FIG. 13 is a partial exploded view similar to FIGS. 1 and 7, illustrating a further embodiment of the wheel; and
FIG. 14 is a partial cross sectional view of the wheel as shown in FIG. 13.

### DETAILED DESCRIPTION OF THE PREFERRED EMBODIMENT

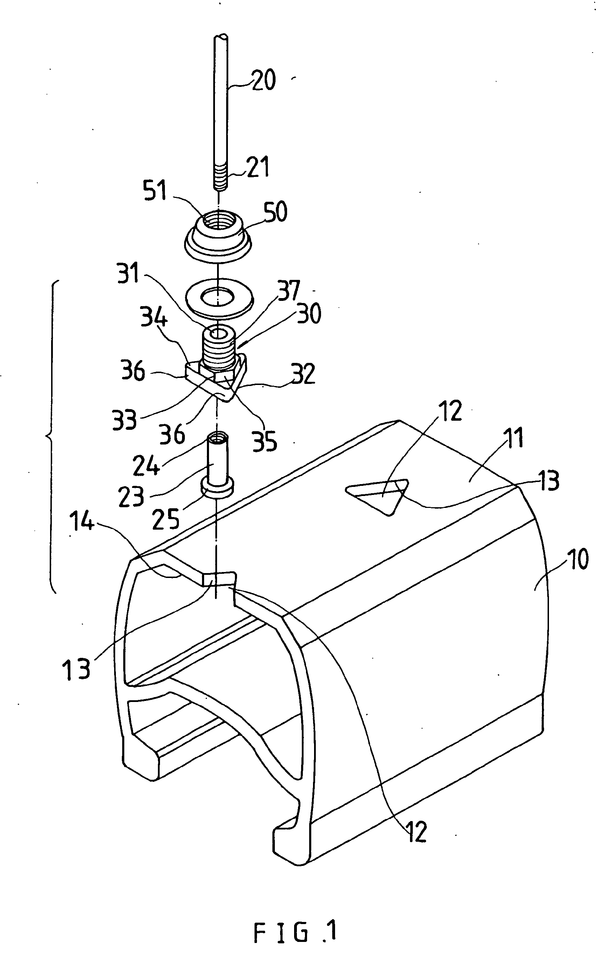

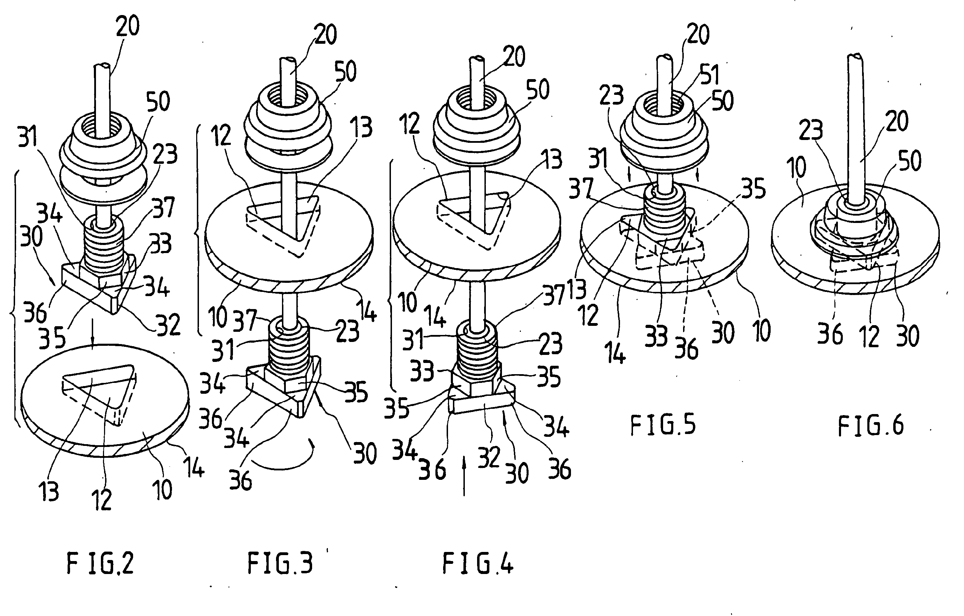

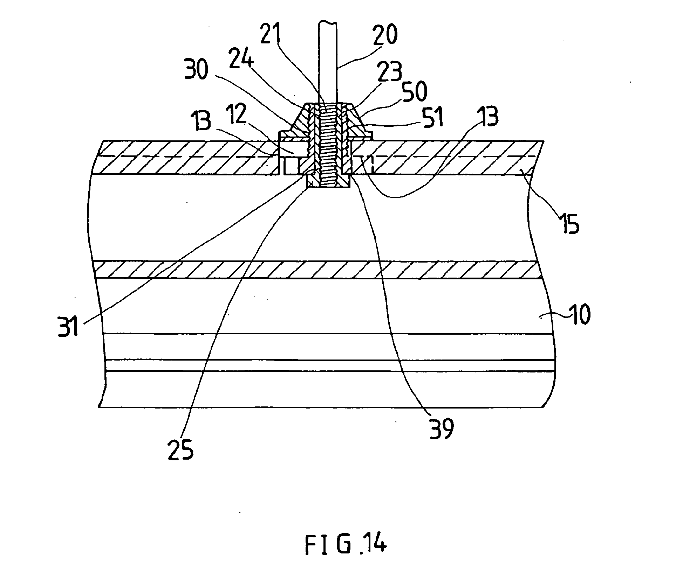

Referring to the drawings, and initially to FIGS. 1 and 2, a wheel in accordance with the present invention comprises a wheel rim 10 and a number or wheel spokes 20 to be attached to the wheel rim 10. Each of the spokes 20 includes a threaded end portion 21 for threading and securing to a screw hole 24 of a barrel 23 (FIG. 14). The barrel 23 may also be solidly formed or secured to the spoke 20 as an integral piece, as that of the typical spokes.

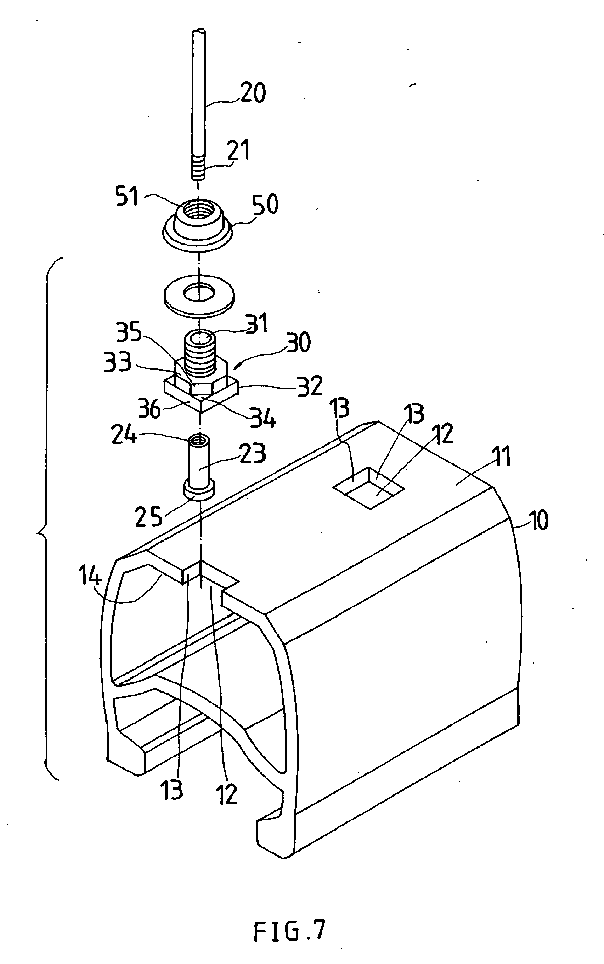

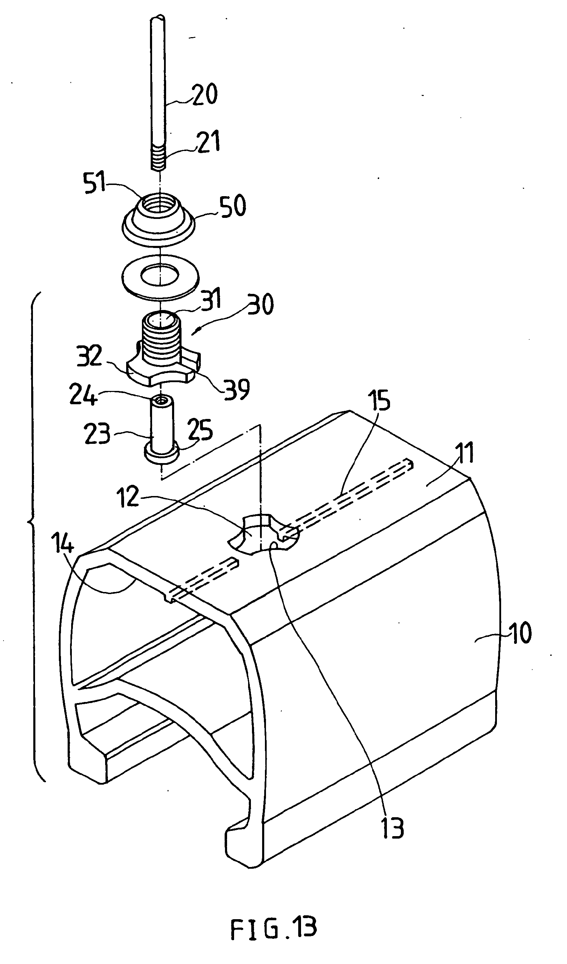

The wheel rim 10 includes an inner peripheral surface 11 having a number of spaced orifices 12 formed therein and defined by three or more engaging surfaces or flanges 13. For example, the orifices 12 of the wheel rim 10 may include a triangular structure (FIGS. 1-6), a square or rectangular structure (FIGS. 7-12), or the other shaped structure (FIGS. 13, 14).

A number of latches 30 each includes a bore 31 formed therein for receiving the spoke 20 or the barrel 23 (FIG. 14) which includes an outer diameter no greater than the inner diameter of the bore 31 of the latch 30, for allowing the spoke 20 or the barrel 23 to be threaded or engaged through the bore 31 of the latch 30. The spoke 20 or the barrel 23 includes an enlarged head 25 having an outer diameter greater than the inner diameter of the bore 31 of the latch 30, for securing or anchoring the spoke 20 or the barrel 23 to the wheel rim 10 (FIG. 14).

Each of the latches 30 includes a base 32 having a shape corresponding to that of the orifices 12 of the wheel rim 10, for allowing the base 32 to be engaged through the orifices 12 of the wheel rim 10. For example, the base 32 of the latch 30 may include a triangular structure (FIGS. 1-6), a square or rectangular structure (FIGS. 7-12), or the other shaped structure (FIGS. 13, 14), for engaging through the corresponding orifices 12 of the wheel rim 10.

Each of the latches 30 includes a catch 33 formed or provided or disposed on the base 32, and having an outer peripheral contour no greater than that of the base 32, for allowing the catch 33 to be engaged through the orifices 12 of the wheel rim 10. The catch 33 includes one or more cut off portions 34 formed therein, to form or define one or more engaging surfaces 35 therein, and to form or define one or more projections or tongues 36 in the base 32 relatively.

When the catch 33 of the latch 30 is rotated relative to the wheel rim 10 for an angle, the cut off portions 34 of the catch 33 may be used to receive the flanges 13 of the wheel rim 10, for allowing the catch 33 to be engaged into the orifices 12 of the wheel rim 10. The engaging surfaces 35 of the catch 33 are arranged to be engaged with the flanges 13 of the wheel rim 10, for positioning or anchoring the catch 33 in the orifices 12 of the wheel rim 10, and for preventing the catch 33 and the latch 30 from being rotated relative to the wheel rim 10.

For example, as shown in FIGS. 1-6, the latch 30 is required to be rotated relative to the wheel rim 10 for 120 degrees, to allow the catch 33 to be engaged into the orifices 12 of the wheel rim 10. As shown in FIGS. 7-12, the latch 30 is required to be rotated relative to the wheel rim 10 for 90 degrees, to allow the catch 33 to be engaged into the orifices 12 of the wheel rim 10. It is preferable that the catch 33 includes a thickness no greater than the thickness of the wheel rim 10, for allowing the catch 33 to be received within the orifices 12 of the wheel rim 10.

After the latch 30 has been rotated relative to the wheel rim 10 to allow the catch 33 of the latch 30 to be engaged into the orifices 12 of the wheel rim 10, from FIG. 3 to FIG. 4, the projections or tongues 36 of the base 32 of the latch 30 may be engaged with the bottom or inner surface 14 of the wheel rim 10 (FIGS. 5, 6, 11), in order to position or secure or anchor the latch 30 to the wheel rim 10, and so as to prevent the latch 30 from being disengaged from the wheel rim 10.

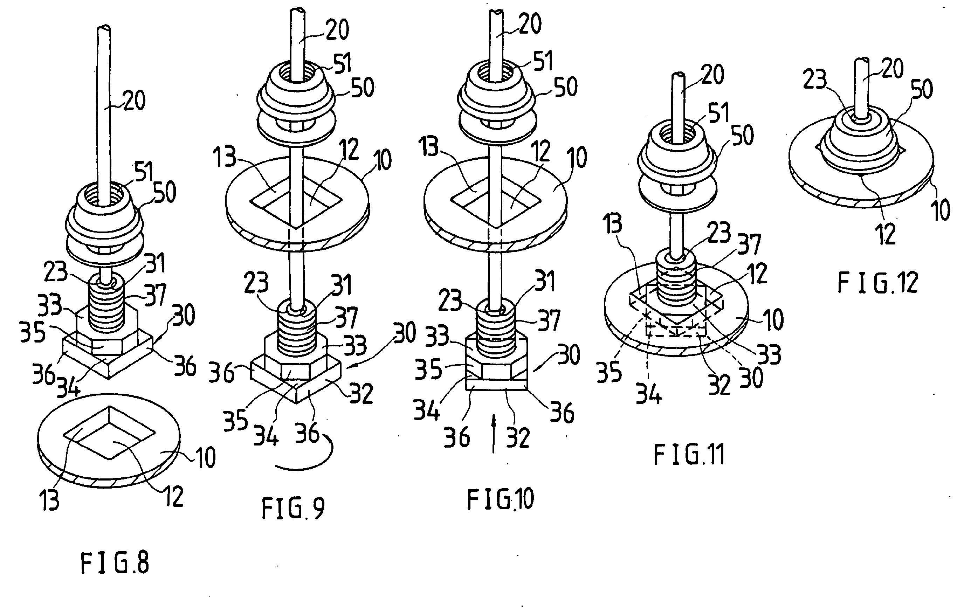

Each of the latches 30 includes a threaded portion or a fastener 37 formed or provided on the catch 33, and having an outer peripheral contour no greater than that of the base 32 and the catch 33, for allowing the fastener 37 also to be engaged into the orifices 12 of the wheel rim 10. A lock nut or another fastener 50 includes an inner thread 51 formed therein for threading with the fastener 37 (FIGS. 5, 11), and engageable with the wheel rim 10 (FIGS. 6, 12), for securing the latch 30 to the wheel rim 10.

Alternatively, as shown in FIGS. 13, 14, the wheel rim 10 may include one or more ribs 15 extended from the bottom or inner surface 14 thereof, and the latch 30 may include one or more grooves 39 formed in the base 32, for receiving the ribs 15, after the latch 30 has been rotated relative to the wheel rim 10, in order to position or secure or anchor the latch 30 to the wheel rim 10.

It is to be noted that the latch 30 and the barrel 23 may first be engaged onto or secured to the spoke 20, before the latch 30 is engaged through the orifices 12 of the wheel rim 10. The lock nut or the fastener 50 may be selectively threaded with the fastener 37 of the latch 30, such that the spokes 20 may be easily and detachably secured to the wheel rim 10 with the latch 30 and/or the fastener 50.

Accordingly, the wheel in accordance with the present invention includes a number of spokes that may be detachably secured to the wheel rim of the wheel, for allowing the spokes to be easily secured or assembled into the wheel rim of the wheel.

## Claims

1. A wheel comprising:
a wheel rim (10) including a plurality of orifices (12) formed therein, and including an inner surface (11), and each of said orifices (12) of said wheel rim (10) being defined by at least one engaging flange (13),
a plurality of spokes (20) to be attached to said wheel rim (10),
a plurality of latches (30) each including a bore (31) formed therein to receive said spokes (20) respectively, and to be attached to said spokes (20) respectively,
each of said latches (30) including a base (32) having a shape corresponding to that of said orifices (12) of said wheel rim (10), for allowing said base (32) of said latch (30) to be engaged through said orifices (12) of said wheel rim (10), **characterized in that**
each of said latches (30) further including a catch (33) disposed on said base (32), and having an outer peripheral contour no greater than that of said base (32), to allow said catch (33) to be engaged through said orifices (12) of said wheel rim (10), and
each of said catches (33) including at least one cut off portion (34) formed therein, to define at least one engaging surface (35) therein, and to form at least one tongue (36) in said base (32) relative to said catch (33),
said catches (33) being engageable into said orifices (12) of said wheel rim (10) when said catches (33) of said latches (30) are rotated relative to said wheel rim (10), to engage said at least one engaging flange (13) of said wheel rim (10) into said at least one cut off portion (34) of said catches (33), and to engage said at least one tongue (36) of said base (32) with said inner surface (11) of said wheel rim (10), and thus to anchor said base (32) of said latch (30) to said wheel rim (10).

2. The wheel as claimed in claim 1, wherein each of said latches (30) includes a first fastener (37) extended from said catch (33), and a second fastener (50) threaded to said first fastener (37) and engaged with said wheel rim (10), to secure said latch (30) to said wheel rim (10).

3. The wheel as claimed in claim 1, wherein each of said spokes (20) includes a barrel (23) secured thereto and engaged into said bores (37) of said latches (30) respectively.

4. The wheel as claimed in claim 3, wherein each of said barrels (23) includes a screw hole (24) formed therein, each of said spokes (20) includes a threaded end portion (21) for threading with said screw hole (24) of said barrels (23), and for securing said barrels (23) to said spokes (20) respectively.

5. The wheel as claimed in claim 3, wherein each of said barrels (23) includes an enlarged head (25) formed thereon, for engaging with said latches (30) and for anchoring said spokes (20) to said latches (30) respectively.

## Patentansprüche

1. Rad, mit:
einer Radfelge (10) mit einer Mehrzahl von darin ausgebildeten Öffnungen (12) und mit einer Innenseite (11), und wobei jede der Öffnungen (12) der Radfelge (10) von wenigstens einem Eingriffsflansch (13) gebildet wird,
einer Mehrzahl von an der Radfelge (10) zu befestigenden Speichen (20),
einer Mehrzahl von Rastvorrichtungen (30) mit jeweils einer darin ausgebildeten Bohrung zum jeweiligen Aufnehmen der Speichen (20) darin und zum jeweiligen Befestigen an den Speichen (20),
wobei jede der Rastvorrichtungen (30) eine Basis (32) mit einer Form aufweist, die zu derjenigen der Öffnungen (12) der Radfelge (10) korrespondiert, damit die Basis (32) der Rastvorrichtung (30) durch die Öffnungen (12) der Radfelge (10) hindurch in Eingriff kommen kann,
**dadurch gekennzeichnet, dass** jede der Rastvorrichtungen (30) ferner eine Arretierung (33) umfasst, die an der Basis (32) angeordnet ist und eine umlaufende äußere Kontur aufweist, die nicht größer als diejenige der Basis (32) ist, damit die Arretierung (33) durch die Öffnungen (12) der Radfelge (10) hindurch in Eingriff kommen kann, und
jede der Arretierungen (33) wenigstens einen darin ausgebildeten, gekappten Abschnitt (34) umfasst, um wenigstens eine Eingriffsfläche (35) darin zu bilden und wenigstens eine Zunge (36) relativ zu der Arretierung (33) in der Basis (32) zu bilden,
wobei die Arretierungen (33) in Eingriff in die Öffnungen (12) der Radfelge (10) bringbar sind, wenn die Arretierungen (33) der Rastvorrichtungen (30) relativ zu der Radfelge (10) gedreht werden, um wenigstens einen Eingriffsflansch (13) der Radfelge (10) in Eingriff in wenigstens einen gekappten Abschnitt (34) der Arretierungen (33) zu bringen und die wenigstens eine Zunge der Basis (32) mit der Innenseite (11) der Radfelge (10) in Eingriff zu bringen und mithin die Basis (32) der Rastvorrichtung (30) an der Radfelge (10) zu verankern.

2. Rad nach Anspruch 1, wobei jede der Rastvorrichtungen (30) einen ersten Befestiger (37), der aus der Arretierung (33) vorsteht, und einen zweiten Befestiger (50) umfasst, der an dem ersten Befestiger (37) verschraubt ist und mit der Radfelge (10) in Eingriff steht, um die Rastvorrichtung (30) an der Radfelge (10) zu sichern.

3. Rad nach Anspruch 1, wobei jede der Speichen (20) einen Zylinder (23) umfasst, der daran gesichert ist und jeweils in den Bohrungen (31) der Rastvorrichtungen (30) in Eingriff steht.

4. Rad nach Anspruch 3, wobei jeder der Zylinder (23) eine darin ausgebildetes Schraubenloch (24) umfasst und jede der Speichen (20) einen mit Gewinde versehenen Endabschnitt (21) zum Einschrauben in das Schraubenloch (24) der Zylinder (23) und zum Sichern der Zylinder (23) an den jeweiligen Speichen (20) umfasst.

5. Rad nach Anspruch 3, wobei jeder der Zylinder (23) einen daran ausgebildeten vergrößerten Kopf (25) zum Ineingriffbringen mit den Rastvorrichtungen (30) und zum Verankern der jeweiligen Speichen (20) mit den Rastvorrichtungen (30) umfasst.

## Revendications

1. Roue comprenant :
une jante de roue (10) comprenant une multiplicité d'orifices (12) formés dans celle-ci, et comprenant une surface interne (11), et chacun desdits orifices (12) de ladite jante de roue (10) étant défini par au moins une bride d'accouplement (13),
une multiplicité de rayons (20) pour être attachés à ladite jante de roue (10),
une multiplicité de cliquets (30) comprenant chacun un alésage (31) formé dans celui-ci pour recevoir respectivement lesdits rayons (20), et pour être attachés respectivement aux dits rayons (20),
chacun desdits cliquets (30) comprenant une base (32) présentant une forme correspondant à celle desdits orifices (12) de ladite jante de roue (10), afin de permettre à ladite base (32) dudit cliquet (30) d'être engagée à travers lesdits orifices (12) de ladite jante de roue (10), **caractérisée en ce que**
chacun desdits cliquets (30) comprend en outre un mécanisme de blocage (33) disposé sur ladite base (32) et présentant un contour périphérique externe n'étant pas plus grand que celui de ladite base (32), afin de permettre audit mécanisme de blocage (33) d'être mis en prise à travers lesdits orifices (12) de ladite jante de roue (10), et
chacun desdits mécanismes de blocage (33) comprenant au moins une partie découpée (34) formée dans celui-ci afin de définir au moins une surface de prise (35) dans celui-ci, et pour former au moins une langue (36) dans ladite base (32) par rapport audit mécanisme de blocage (33),
lesdits mécanismes de blocage (33) pouvant être mis en prise dans lesdits orifices (12) de ladite jante de roue (10) lorsque lesdits mécanismes de blocage (33) desdits cliquets (30) sont pivotés par rapport à ladite jante de roue (10) afin de mettre en prise ladite au moins une bride d'accouplement (13) de ladite jante de roue (10) avec ladite au moins une partie découpée (34) desdits mécanismes de blocage (33), et pour mettre en prise ladite au moins une langue (36) de ladite base (32) avec ladite surface interne (11) de ladite jante de roue (10), et ainsi ancrer ladite base (32) dudit cliquet (30) dans ladite jante de roue (10).

2. Roue selon la revendication 1, dans laquelle chacun desdits cliquets (30) comprend une première fixation (37) s'étendant depuis ledit mécanisme de blocage (33), et une seconde fixation (50) vissée sur la première fixation (37) et en prise avec ladite jante de roue (10) afin de fixer ledit cliquet (30) à ladite jante de roue (10).

3. Roue selon la revendication 1, dans laquelle chacun desdits rayons (20) comprend un cylindre (23) fixé sur celui-ci et en prise respectivement avec lesdits alésages (31) desdits cliquets (30).

4. Roue selon la revendication 3, dans laquelle chacun desdits cylindres (23) comprend un trou de vis (24) formé dans celui-ci, chacun desdits rayons (20) comprend une partie d'extrémité filetée (21) pour se visser dans ledit trou de vis (24) desdits cylindres (23) et pour fixer lesdits cylindres (23) respectivement sur lesdits rayons (20).

5. Roue selon la revendication 3, dans laquelle chacun desdits cylindres (23) comprend une tête élargie (25) formée sur celui-ci, pour entrer en prise avec lesdits cliquets (30) et pour ancrer lesdits rayons (20) respectivement dans lesdits cliquets (30).
